**Europäisches Patentamt**

**European Patent Office**

**Office européen des brevets**

(19)

(11) Publication number: **0 226 279**
**B1**

(12) **EUROPEAN PATENT SPECIFICATION**

(45) Date of publication of the patent specification:
**25.07.90**

(21) Application number: **86307491.0**

(22) Date of filing: **30.09.86**

(51) Int. Cl.⁵: **G11B 5/71**

(54) **Process for lubricating magnetic disks, and to magnetic disks.**

(30) Priority: **12.11.85 US 796811**

(43) Date of publication of application:
**24.06.87 Bulletin 87/26**

(45) Publication of the grant of the patent:
**25.07.90 Bulletin 90/30**

(84) Designated Contracting States:
**DE FR GB**

(56) References cited:
**WO-A-87/01501**
**DE-A- 3 507 987**
**US-A- 4 268 556**
**US-A- 4 446 193**
**US-A- 4 526 833**

(73) Proprietor: **MAGNETIC PERIPHERALS INC., 8100-34th
Avenue South, Minneapolis Minnesota 55440(US)**

(72) Inventor: **Janssen, Robert Allen, 2845 Abbotswell Drive,
Alpharetta, AG 30201(US)**
Inventor: **Sorenson, Gary Douglas, 10085 Amsden Way,
Eden Prairie Minnesota 55344(US)**

(74) Representative: **Caro, William Egerton et al, J. MILLER &
CO. Lincoln House 296-302 High Holborn, London
WC1V 7JH(GB)**

## Description

This invention relates to processes for lubricating magnetic disks and to magnetic disks.

Lubricants applied, but not bonded, to magnetic disks are subject to removal either by use of cleaning chemicals or by spin-off as the magnetic disk is rotated. US-A-4,268,556 proposes a series of highly polar lubricants which are resistant to solvents. US-A-4,446,193 proposes a diazo compound applied to a disk. This compound is then heated to form a carbene intermediate which bonds to polymeric coatings and metal oxides of most magnetic disks. However, diazo compounds are toxic and highly unstable, rendering both the manufacturing process and resulting disk potentially unsafe. In WO-A-87/01501 there is disclosed a magnetic disk record which is coated with a polymeric magnetic recording film and which is also coated with a fluorocarbon polymeric lubricant having isocyanate terminal groups.

According to one aspect of the present invention there is provided a process for lubricating a magnetic disk, which process comprises applying to the magnetic disk a polymeric lubricant having at least one functional terminal group, heating the lubricant to at least 65°C for at least six hours so that the functional terminal group covalently bonds to surface polymers and/or metal oxides of the magnetic disk, and then either removing the unreacted lubricant with a solvent and then contacting the disk with a non-functionalised lubricant or reacting the unreacted lubricant with an aziridine or epoxide compound.

Preferably the lubricant is heated from 65°C to 149°C for six to ten hours.

In one embodiment the aziridine compound has three aziridine groups. The aziridine compound having three aziridine groups reacts with three carboxyl groups to form a larger polymer of high molecular weight having exceptionally low surface friction and no detectable spin-off.

Preferably, the said at least one functional terminal group is at least one functional terminal carboxyl group.

The non-functionalised lubricant may be a perfluorinated polyether. The lubricant may be a perfluorinated polyether having at least one terminal carboxyl group.

The solvent is preferably 1,1,2-trichloro-trifluoroethane.

According to another aspect of the present invention, there is provided a process for lubricating a magnetic disk, which process comprises applying to the magnetic disk a polymeric lubricant having at least one functional terminal carboxyl group, heating the lubricant so that the functional terminal group covalently bonds to surface polymers and/or metal oxides of the magnetic disk, and then either removing the unreacted lubricant with a solvent and then contacting the disk with a non-functionalised lubricant or reacting the unreacted lubricant with an aziridine or epoxide compound.

According to a further aspect of the present invention there is provided a magnetic disk having lubricant molecules a part of which are bonded to a binder and/or magnetic particles on the disk, said bond having been formed from a carboxyl group on said lubricant molecules, and wherein the other part of said lubricant molecules are bonded to an aziridine or an epoxide compound.

The present inventors have determined that mere application of a carboxyl terminated lubricant, for example as in Examples 9 and 13 of US-A-4,268,556, results in a lubricant having extremely poor surface friction properties and a relatively poor surface retention characteristic. However, heating such a lubricant, for example above 65°C (150°F) for six or more hours, dramatically increases the surface retention characteristic. Also the amount of lubricant removable from the disk by solvents dramatically decreases, indicating an increase in the amount of lubricant bonded to polymeric coatings and metal oxides of the magnetic disk. However, unless the residue is removed, the remaining carboxyl terminated polymers cause high surface friction.

A disk having only a covalently bonded lubricant may exhibit good frictional and retention properties, but wear characteristics can be expected to be poor in that lubricant, once worn from a location, is not replaced with more mobile lubricant. The present invention solves this problem in one aspect by the addition of a conventional, non-functionalised lubricant to the surface having the bonded lubricant with an aziridine or epoxide compound. The non-functionalised lubricant increases wear resistance and at the same time does not spin-off to any significant degree. The reacted unbound lubricant exhibits no spin-off whatsoever. It is speculated that the cause of this increase in resistance to spin-off is the uncoiling of the bonded lubricant under heat to form a tree-like structure between which the non-functionalised lubricant or the inert functionalised lubricant must flow. The tree-like structure is confirmed by the increased thickness of the bonded coating under the influence of heat.

In the following Examples, spin-off of lubricant was determined by rotating the lubricated disk at 3600 rpm, providing silicon targets at the periphery of the disk, and periodically analysing the targets for the quantity of fluorine they contain, which is proportional to the quantity of fluorinated lubricant spun off. Surface friction was determined by the magnitude of force necessary to break free a 30 g weighted head. Sliding friction was the force on the head at 200 ips (500 cm/sec). Wear was determined by a count of 1000 particles in six minutes, which is indicative of catastrophic failure. Thickness was determined by ESCA (electron scanning for chemical analysis).

## EXAMPLE 1

This first Example is of a non-functionalised lubricant conventionally used to lubricate a magnetic disk. The test results provide a basis for comparison with the results of the following Examples.

A rigid magnetic disk having magnetisable iron and aluminium oxide particles in a phenolic-phenoxy polymeric binder was lubricated by spraying a 2% by weight solution of a perfluorinated polyether (Krytox 143 AC (Trade Mark) from Dupont) and 1,1,2-trichloro-trifluoro-ethane (Freon 113 - Trade Mark). A perfluorinated polyether has the general formula:

$$CF_3-(C_2F_3CF_3O)_m-(CF_2CF_2O)_n-CF_3$$

where m and n are varied to provide for varying viscosities. In this Example, the average molecular weight was 6,200 and the viscosity was 270 centistokes at 38°C (100°F). After application, the thickness of the lubricant layer on the disk was 70Å (7.0 $\times 10^{-7}$ cm) and the weight of the lubricant on the disk was 2.5 mg.

The above described tests were performed on the disk and the following results obtained:
static friction = 3.9 grams
sliding friction = 2.3 grams
lubricant spin-off rate = 6.3% per 30 days
wear time to failure = 8.3 hours.

EXAMPLE 2

In this Example a functionalised lubricant was applied to the disk as in the previous Example. The lubricant contained a perfluorinated polyether of an identical structure to that of Example 1, except that one of the terminating $CF_3$ groups was replaced by a functional oxygenated terminal group in the form of a carboxyl group (-COOH). The perfluorinated polyether was that available under the Trade Mark Krytox 157 M from Dupont. The average molecular weight was 4,500 and the viscosity was 280 centistokes at 38°C (100°F). A 2% solution with 1,1,2-trichloro-trifluoro-ethane (Freon 113 - Trade Mark) as in Example 1, was applied to a disk by spraying and hand buffing. The tests were then performed with the following results:
static friction = 20.4 grams
sliding friction = 7.6 grams
lubricant spin-off rate = 5.9% per 30 days
wear time to failure = 3.2 hours.

The results show that this carboxyl terminated lubricant exhibited poor frictional and wear characteristics while the retention time is not significantly improved.

EXAMPLE 3

This Example was the same as Example 2, except that the disk was heated at 121°C (250°F) for twenty four hours before tests were performed to give the following results:
static friction = 18.4 grams
sliding friction = 7.0 grams
lubricant spin-off rate = 0.8% per 30 days
wear time to failure = 4.6 hours.

These results show a significant reduction in spin-off lubricants.

EXAMPLE 4

This Example was the same as Example 3, except that the disk was subsequently exposed to a solvent in the form of 1,1,2-trichloro-trifluoro-ethane (Freon 113 - Trade Mark). This removed all unbonded lubricant. The total weight of lubricant removed was 6.2 mg. A non-functional lubricant in the form of a perfluorinated polyether (Krytox 143 AC - Trade Mark) was then applied as in Example 1 using a 2% solution in 1,1,2-trichloro-trifluoro-ethane (Freon 113 - Trade Mark). The disk absorbed 6.0 mg of the lubricant, about two and one half times the amount absorbed by the disk of Example 1. The tests were performed giving:
static friction = 3.5 grams
sliding friction = 2.5 grams
lubricant spin-off rate = 1.0% per 30 days
wear time to failure = 12.3 hours.

Static and sliding friction were similar to Example 1 but the lubricant spin-off rate is six times better and wear time one and a half times better. The bonded lubricant contributed to the increased surface retention.

EXAMPLE 5

This Example was the same as Example 3, except that the disk used did not include metal oxide particles in the binder. After heat treatment, the disk was exposed to vapour of 1,1,2-trichloro-trifluoro-ethane and 2.5 mg of the lubricant was removed, compared with 6.2 mg in Example 4. Analysis using ESCA (electron scanning for chemical analysis) equipment showed virtually no remaining lubricant indicating virtually none of the functionalised lubricant polymers bonded to the binder. This indicates that the bonding is to the metal oxide particles, most probably to the oxygen of the metal oxides. It is expected that the lubricant, when heated, will also bond to organic binders having hydroxyl or polar groups.

EXAMPLE 6

This Example is the same as Example 3, except that the heat treated lubricant on the disk was then oversprayed with a 1% solution by weight of an aziridine compound of the general formula

$$R-(N-CH_2)_2)_3$$

which contains three aziridine groups, in 1,1,2-trichloro-trifluoro-ethane (Freon 113 - Trade Mark). In this Example, the aziridine compound is trimethylolpropanetris-(B-(N-aziridinyl)propionate) available from Cordova Chemical Company under the Trade Mark XAMA-2. In this Example the molecular weight of the compound was 425 and the viscosity was 125 centistokes at 22°C (72°F). The carbon atoms of each aziridine molecule react with the terminal carboxyl groups of three of the unbonded lubricant molecules to form a unified molecule having a central R surrounded by three branches of the aziridine-functionalised lubricant. The disk was allowed to stand for several minutes at room temperature prior to testing:
static friction = 2.0 grams
sliding friction = 1.8 grams
lubricant spin-off rate = 0% per 30 days
wear time to failure = greater than 24 hours.

These results show significant reductions in friction and no observable spin-off. Also the wear time for the disk was dramatically improved over the previous Examples.

The aziridine containing compounds may have fewer than three aziridine groups of molecules. Also, an epoxide containing radical, e.g. H$_2$COCH-R where R is an alkyl group, may be used instead of the aziridine containing compounds. The epoxide reacts with the carboxyl terminal group of the functionalised lubricant to form the following product:

R$_f$ COO - CH$_2$CHOH - R,

where R$_f$ is the perfluorinated polyether lubricant and R is an alkyl group. Moreover, a multi epoxy containing molecule can also be utilised.

In the above Examples, the lubricated disk was heated for twenty four hours at 121°C (250°F). Subsequent testing has determined that sufficient functionalised lubricant retention is obtained when the disk is heated from 65°C (150°C) to 149°C (300°F) for between six and ten hours. Temperatures above 149°C (300°F) may reduce the time factor further.

## Claims

1. A process for lubricating a magnetic disk, which process comprises applying to the magnetic disk a polymeric lubricant having at least one functional terminal group, heating the lubricant to at least 65°C for at least six hours so that the functional terminal group covalently bonds to surface polymers and/or metal oxides of the magnetic disk, and then either removing the unreacted lubricant with a solvent and then contacting the disk with a non-functionalised lubricant or reacting the unreacted lubricant with an aziridine or epoxide compound.

2. A process as claimed in claim 1 in which the lubricant is heated from 65°C to 149°C for six to ten hours.

3. A process as claimed in claim 1 or 2 in which the aziridine compound has three aziridine groups.

4. A process as claimed in any preceding claim in which the said at least one functional terminal group is at least one functional terminal carboxyl group.

5. A process as claimed in claim 4 in which the non-functionalised lubricant is a perfluorinated polyether.

6. A process as claimed in claim 5 in which the perfluorinated polyether is a perfluorinated polyether having at least one terminal carboxyl group.

7. A process as claimed in claim 1 or 2 in which the solvent is 1,1,2-trichloro-trifluoro-ethane.

8. A process for lubricating a magnetic disk, which process comprises applying to the magnetic disk a polymeric lubricant having at least one functional terminal carboxyl group, heating the lubricant so that the functional terminal group covalently bonds to surface polymers and/or metal oxides of the magnetic disk, and then either removing the unreacted lubricant with a solvent and then contacting the disk with a non-functionalised lubricant or reacting the unreacted lubricant with an aziridine or epoxide compound.

9. A magnetic disk having lubricant molecules a part of which are bonded to a binder and/or magnetic particles on the disk, said bond having been formed from a carboxyl group on said lubricant molecules, and wherein the other part of said lubricant molecules are bonded to an aziridine or an epoxide compound.

## Patentansprüche

1. Verfahren zur Herstellung eines Gleitfilms auf einer Magnetplatte, bei dem das Verfahren das Aufbringen eines polymeren Gleitmittels mit zumindestens einer funktionellen endständigen Gruppe auf die Magnetplatte, das Erwärmen des Gleitmittels auf zumindestens 65°C über zumindestens sechs Stunden derart, daß die funktionelle endständige Gruppe eine kovalente Bindung mit Polymeren und/oder Metalloxyden der Oberfläche der Magnetplatte eingeht, und nachfolgend entweder das Entfernen des keine Reaktion eingegangenen Schmiermittels mit einem Lösungsmittel und darauffolgende Kontaktbehandlung der Magnetplatte mit einem nicht-funktionalisierten Schmiermittel oder das Hervorrufen einer Reaktion des Gleitmittels, das keine Reaktion eingegangen ist, mit einer Aziridin- oder Epoxid-Verbindung umfaßt.

2. Verfahren nach Anspruch 1, bei dem das Gleitmittel auf 65°C bis 149°C für sechs bis zehn Stunden erwärmt wird.

3. Verfahren nach Anspruch 1 oder 2, bei dem die Aziridin-Verbindung drei Aziridin-Gruppen aufweist.

4. Verfahren nach einem der vorhergehenden Ansprüche, bei dem die genannte zumindestens eine funktionelle endständige Gruppe zumindestens eine funktionelle endständige Carboxylgruppe ist.

5. Verfahren nach Anspruch 4, dadurch gekennzeichnet, daß das nicht-funktionalisierte Gleitmittel ein perfluorisierter Polyäther ist.

6. Verfahren nach Anspruch 5, bei dem der perfluorinierte Polyäther ein perfluorisierter Polyäther mit zumindestens einer endständigen Carboxylgruppe ist.

7. Verfahren nach Anspruch 1 oder 2, dadurch gekennzeichnet, daß das Lösungsmittel 1,1,2-Trichlor-Trifluor-Äthan ist.

8. Verfahren zur Herstellung eines Gleitfilms auf einer Magnetplatte, bei dem das Verfahren das Aufbringen eines polymeren Gleitmittels mit zumindestens einer funktionellen endständigen Carboxylgruppe auf die Magnetplatte, das Erwärmen des Gleitmittels derart, daß die funktionelle endständige Gruppe eine kovalente Bindung mit Polymeren und/oder Metalloxyden der Oberfläche der Magnetplatte eingeht, und nachfolgend entweder das Entfernen des keine Reaktion eingegangenen Gleitmittels mit einem Lösungsmittel und darauffolgende Kontaktbehandlung der Magnetplatte mit einem nicht-funktionalisierten Gleitmittel oder das Hervorrufen einer Reaktion des keine Reaktion eingegangenen Gleitmittels mit einer Aziridin- oder Epoxid-Verbindung umfaßt.

9. Magnetplatte mit Gleitmittelmolekülen, von denen ein Teil mit einem Binder und/oder mit magneti-

schen Teilchen auf der Magnetplatte in Bindung stehen, wobei die Bindung aus einer Carboxylgruppe an den Gleitmittelmolekülen gebildet wurde, und worin der andere Teil der Gleitmittelmoleküle mit einer Aziridin- oder einer Epoxid-Verbindung in Bindung steht.

## Revendications

1. Un procédé pour lubrifier un disque magnétique, ce procédé consistant à appliquer au disque magnétique un lubrifiant polymère ayant au moins un groupe fonctionnel terminal, à chauffer le lubrifiant à au moins 65°C pendant au moins 6 h, de manière que le groupe fonctionnel terminal se fixe par covalence aux polymères et/ou aux oxydes métalliques de surface du disque magnétique, et ensuite soit à enlever avec un solvant le lubrifiant qui n'a pas réagi et ensuite à mettre le disque en contact avec un lubrifiant sans groupe fonctionnel, soit à faire réagir avec un composé d'aziridine ou d'époxyde le lubrifiant qui n'a pas réagi.

2. Un procédé selon la revendication 1, dans lequel le lubrifiant est chauffé de 65 à 149°C pendant 6 à 10 h.

3. Un procédé selon la revendication 1 ou 2, dans lequel le composé d'aziridine contient trois groupes aziridines.

4. Un procédé selon l'une quelconque des revendications précédentes, dans lequel le ou lesdits groupes fonctionnels terminaux sont au moins un groupe fonctionnel carboxyle terminal.

5. Un procédé selon la revendication 4, dans lequel le lubrifiant sans groupe fonctionnel est un polyéther polyfluoré.

6. Un procédé selon la revendication 5, dans lequel le polyéther perfluoré est un polyéther perfluoré ayant au moins un groupe carboxyle terminal.

7. Un procédé selon la revendication 1 ou 2, dans lequel le solvant est le 1,1,2-trichloro-trifluoroéthane.

8. Un procédé pour lubrifier un disque magnétique, ce procédé consistant à appliquer au disque magnétique un lubrifiant polymère ayant au moins un groupe fonctionnel carboxyle terminal, à chauffer le lubrifiant de sorte que le groupe fonctionnel terminal se fixe par covalence aux polymères et/ou aux oxydes métalliques de surface du disque magnétique et ensuite soit à enlever avec un solvant le lubrifiant qui n'a pas réagi et ensuite à mettre le disque en contact avec un lubrifiant sans groupe fonctionnel, soit à faire réagir avec un composé d'aziridine ou d'époxyde le lubrifiant qui n'a pas réagi.

9. Un disque magnétique ayant des molécules de lubrifiant dont une partie est fixée à un liant et/ou à des particules magnétiques sur le disque, ladite liaison ayant été formée à partir d'un groupe carboxyle sur lesdites molécules de lubrifiant, et dans lequel l'autre partie desdites molécules de lubrifiant est fixée à un composé d'aziridine ou d'époxyde.